# EUROPÄISCHE PATENTSCHRIFT

(11) **EP 2 212 596 B1**
(45) Veröffentlichungstag und Bekanntmachung des Hinweises auf die Patenterteilung: **12.12.2012**
(21) Anmeldenummer: 08838583.6
(22) Anmeldetag: 15.10.2008
(51) Int. Cl.: F16K 5/02, F16K 5/10, F16K 5/12, F23N 1/00

(54) **KÜKENHAHN**
TAP COCK
ROBINET À BOISSEAU

(30) Priorität: 17.10.2007 EP 07360051
(43) Veröffentlichungstag der Anmeldung: 04.08.2010
(73) Patentinhaber: BSH Bosch und Siemens Hausgeräte GmbH, 81739 München (DE)
(72) Erfinder: CADEAU, Christophe, F-67100 Strasbourg (FR); MASTIO, Emmanuel, F-31450 Fourquevaux (FR)
(86) Internationale Anmeldenummer: PCT/EP2008/063904
(87) Internationale Veröffentlichungsnummer: WO 2009/050211

(56) Entgegenhaltungen:
- AT-B- 134 556
- DE-A1- 1 803 458
- DE-A1- 1 909 890
- GB-A- 1 414 868
- US-A1- 2004 004 203

## Beschreibung

Die Erfindung betrifft einen Gasabsperrhahn in Form eines Kükenhahns und einen Gasherd mit einem solchen Kükenhahn.

Allgemein bekannt ist ein Kükenhahn mit einem Hahnkörper (Buchse), der eine Kükenaufnahmeöffnung und eine dorthinein mündende Hahn-Gasdurchtrittsöffnung zum Hindurchleiten von Gas zu oder von der Kükenaufnahmeöffnung aufweist. In die Kükenaufnahmeöffnung ist ein Küken einsetzbar. Das Küken weist eine Außenwandung auf, welche gasdicht drehbar in der Innenwand der Kükenaufnahmeöffnung gelagert ist. Das Küken weist außerdem eine Küken-Gasdurchtrittsöffnung auf zum Hindurchleiten von Gas von bzw. zu der Hahn-Gasdurchtrittsöffnung durch das Küken abhängig von einem einstellbaren Drehwinkelbereich zwischen dem Hahnkörper und dem Küken.

Aus DE 1 803 458 ist ein Kükenhahn mit mehreren Zufluss- und Abflusskanälen als Hahn-Gasdurchtrittsöffnungen bekannt. Zur Auswahl der Verbindung einer ersten Hahn-Gasdurchtrittsöffnung mit einer weiteren einer Vielzahl von Hahn-Gasdurchtrittsöffnungen weist das Küken auf seiner Außenwand eine Nut auf, welche längs einer zur Drehachse des Kükens geneigten Kurve verläuft.

DE 1 909 890 beschreibt einen Regel- bzw. Steuerhahn entsprechend den im Oberbegriff von Anspruch 1 definierten Merkmalen, bei welchem eine Küken-Gasdurchtrittsöffnung nicht als zylindrische Bohrung ausgearbeitet ist, sondern einen in Umfangsrichtung konischen Verlauf aufweist. Dadurch soll eine feinere Justierung der Gasdurchtrittsmenge erzielbar sein als im Falle einer zylindrischen Küken-Gasdurchtrittsöffnung, welche zum Einschalten des Gasstroms der Hahn-Gasdurchtrittsöffnung gegenüberliegend angeordnet wird. Eine solche Lösung bietet jedoch keine ausreichend feine Einstellung eines Gasstroms.

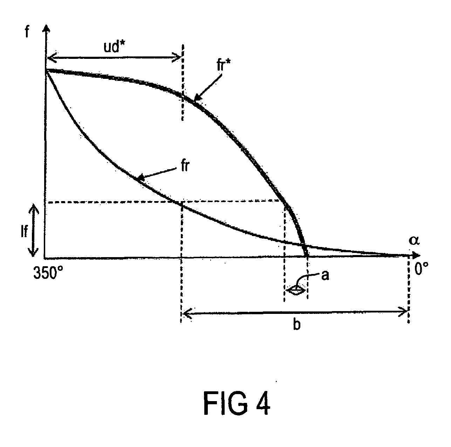

FIG 4 zeigt in einem Diagramm u. a. eine Gasstromrate f, die über einen einstellbaren Drehwinkelbereich α von beispielsweise 0° bis 350° aufgetragen ist. Dargestellt ist ein Gasstrom fr* beim Einsatz lediglich einer zylindrischen Hahn-Gasdurchtrittsöffnung und einer zylindrischen Küken-Gasdurchtrittsöffnung, welche aus einer Position ohne Überlappung in einem Drehwinkelbereich α von etwa 270° bis 350° keinen Gasstrom fr* zulassen. Es ist ein Regelbereich a mit geringer Empfindlichkeit vorhanden, in welchem bei der üblichen Strömungscharakteristik des Gasstroms die geringe Gasstromrate lf zum Einstellen niedrigerer Temperaturbereiche nur mit einem geringen Versatzbereich bzw. Drehwinkelbereich regelbar ist. Dieser Drehwinkelbereich ist so schmal, dass es für einen Bediener in der Praxis schwierig ist, mittels eines typischen Gasknebels per Hand eine geringe Gasstromrate fein auszuwählen oder anzupassen. Andererseits verbleibt ein Regel- bzw. Drehwinkelbereich ud* bei hohen Drehwinkeln, dessen Empfindlichkeit eher hoch ist, was jedoch für einen Bediener wenig nützlich ist, da bei hohem Gasdurchfluss eine leichte Änderung des Gasstroms nicht mehr wahrgenommen wird.

Es ist die Aufgabe der Erfindung, einen Kükenhahn bereitzustellen, mittels dessen sich eine Gaskochstellen-Temperatur mit einfachen Mitteln auch in einem niedrigen Temperaturbereich vergleichsweise genau einstellen lässt.

Diese Aufgabe wird mittels des Kükenhahns mit den Merkmalen des Patentanspruchs 1 und eines Gasherds mit den Merkmalen des Patentanspruchs 11 gelöst. Vorteilhafte Ausgestaltungen sind insbesondere den abhängigen Ansprüchen entnehmbar.

Der Kükenhahn weist einen Hahnkörper mit einer Kükenaufnahmeöffnung auf, sowie eine Hahn-Gasdurchtrittsöffnung zum Hindurchleiten von Gas zu oder von der Kükenaufnahmeöffnung, und ferner ein Küken, dessen Außenwandung gasdicht drehbar in der Kükenaufnahmeöffnung gelagert ist und eine Küken-Gasdurchtrittsöffnung aufweist zum Hindurchleiten von Gas von bzw. zu der Hahn-Gasdurchtrittsöffnung durch den Küken abhängig von einem einstellbaren Drehwinkel α zwischen dem Hahnkörper und dem Küken. Die Außenwandung des Kükens weist einen offenen Kanal auf, welcher mit der Küken-Gasdurchtrittsöffnung verbundenen ist und abhängig vom Drehwinkel von der Hahn-Gasdurchtrittsöffnung zumindest teilweise überdeckt werden kann. Das Küken und entsprechend die Kükenaufnahmeöffnung können eine konische Form oder eine zylindrische Form aufweisen.

Dadurch kann in einem breiten Drehwinkelbereich des Kükens die Gasdurchlassmenge durch den Kükenhahn auch bei geringen Gasmengen fein eingestellt werden, weil der Kanal eine vergleichsweise große Länge mit nicht vernachlässigbarem Strömungswiderstand aufweist.

Die Einstellungsempfindlichkeit ist erfindungsgemäß dadurch erhöht, dass der Kanal eine mehrfach gekrümmte Form aufweist, wodurch die Länge des Kanals weiter erhöht wird.

Es ist insbesondere vorteilhaft, wenn der der Kanal quer bzw. senkrecht zur Umfangsrichtung der Außenwandung verlaufende, insbesondere lineare, Quer-Abschnitte und ferner diese verbindende Verbindungsabschnitte aufweist, wobei zumindest einzelne der Quer-Abschnitte je nach Drehstellung des Kükens die Hahn-Gasdurchtrittsöffnung überdeckend angeordnet sind.

Es wird bevorzugt, wenn sich zumindest die Abstände bezüglich der Umfangsrichtung von zwei Paaren zueinander benachbarter Quer-Abschnitte unterscheiden. Insbesondere weist dann bevorzugt zumindest ein Abstand von zwei zueinander benachbarten Quer-Abschnitten der Vielzahl von Quer-Abschnitten eine andere Breite auf als zumindest ein Abstand von zwei zueinander benachbarten beliebigen anderen Quer-Abschnitten der Vielzahl von Quer-Abschnitten.

Es wird ein Kükenhahn bevorzugt, bei dem zumindest ein Abstand im Umfangsrichtung eines Paars zueinander benachbarter Quer-Abschnitte größer ist als zumindest ein Abstand eines von der Küken-Gasdurchtrittsöffnung dazu weiter beabstandeten Paars zueinander benachbarter Quer-Abschnitte.

Es wird ferner ein Kükenhahn bevorzugt, bei dem zumindest zwei der Vielzahl von Quer-Abschnitten eine quer zur Umfangsrichtung des Kükens höhere Höhenerstreckung aufweisen als eine Höhenerstreckung der Gasdurchtrittsöffnung des Hahnkörpers. Dadurch gelangen die die Querabschnitte verbindenden Verbindungsabschnitte nicht in eine der Hahn-Gasdurchtrittsöffnung gegenüberliegende Stellung, was eine kontrolliertere Einstellung ermöglicht. Zudem kann so ein vergleichsweise langer Kanal bei unverändert dimensionierten Gasdurchtrittsöffnungen erlangt werden.

Es kann aber auch ein Kükenhahn bevorzugt sein, bei dem der Kanal (und insbesondere Querabschnitte davon) in Umfangsrichtung des Kükens zumindest teilweise bzw. abschnittsweise eine gekrümmte, insbesondere wellenförmige, Kontur bzw. Form aufweist. Er kann also auch Abschnitte aufweisen, welche geradlinig ausgestaltet sind oder zwar gekrümmt, aber nicht wellenförmige ausgestaltet sind.

Es kann aber alternativ oder zusätzlich ein Kükenhahn bevorzugt sein, bei dem der Kanal (insbesondere Querabschnitte davon) in Umfangsrichtung des Kükens zumindest teilweise eine eckige Kontur bzw. Form aufweist. Der Kanal kann also eine abschnittsweise eckig gekrümmte Form aufweisen und an anderen Anschnitten z. B. geradlinig und / oder wellenförmig ausgeprägt sein.

Bevorzugt wird ferner zur noch feineren Einstellung des Gasdurchflusses ein Kükenhahn, bei dem der Kanal mit zunehmender Entfernung von der Küken-Gasdurchtrittsöffnung einen zumindest abschnittsweise kleineren Strömungsquerschnitt, insbesondere Kanalbreite, aufweist. Beispielsweise kann ein mehrfach gekrümmter Kanal einen sich kontinuierlich verringernden Strömungsquerschnitt, insbesondere Kanalbreite aufweisen, oder einen sich über mehrere Abschnitte gleichen Strömungsquerschnitts hinweg verringernden Strömungsquerschnitt. Alternativ weist der Kanal einen konstanten Strömungsquerschnitt über zumindest einen wesentlichen Teil seiner Länge auf, insbesondere über seine gesamte Länge.

Insbesondere für einen Kanal mit Quer-Abschnitten wird dann ein Kükenhahn bevorzugt, bei dem die Quer-Abschnitte mit kleinerem Strömungsquerschnitt einen geringeren Abstand zueinander aufweisen als Quer-Abschnitte mit dazu größerem Strömungsquerschnitt zueinander. Allgemein kann der Strömungsquerschnitt auch bei gleichbeabstandeten Quer-Abschnitten (oder allgemeinen Kanalformen) reduziert werden. Der Übergang zwischen zwei Strömungsquerschnitten kann am Quer-Abschnitt und / oder an einem Verbindungsabschnitt zwischen Querabschnitten erfolgen.

Bevorzugt wird, wenn die Hahn-Gasdurchtrittsöffnung beim Drehen des Kükens von den Quer-Abschnitten in der Längserstreckung der Quer-Abschnitte vollständig überstrichen wird. Alternativ wird die Hahn-Gasdurchtrittsöffnung beim Drehen des Kükens vom Kanal über dessen voll Höhe überstrichen.

Das Küken weist bevorzugt eine zentrale und insbesondere längs einer Drehachse verlaufende Gasdurchtrittsöffnung auf, zu welcher die Küken-Gasdurchtrittsöffnung führt; von welcher der Kanal durch einen Wandungsabschnitt beabstandet ist.

Besonders vorteilhaft ist die Verwendung eines solchen Kükenhahns zum Betreiben einer Gaskochstelle. Auch zum Einstellen der Temperatur sonstiger Gasbrenner kann ein solcher Kükenhahn vorteilhaft eingesetzt werden.

Ein Ausführungsbeispiel wird nachfolgend anhand der Figuren schematisch näher erläutert. Gleiche Elemente sind mit gleichen Bezugszeichen versehen. Es zeigen:
- FIG 1: in perspektivischer Ansicht Komponenten eines Kükenhahns zur Regelung eines Gasstroms zu einem Gasbrenner in auseinandergezogener Darstellung;
- FIG 2: in perspektivischer Seitenansicht ein Küken eines solchen Kükenhahns;
- FIG 3: eine Oberfläche eines solchen Kükens in flächig abgerollter Darstellung; und
- FIG 4: ein Diagramm zur Veranschaulichung von Einstellmöglichkeiten eines Gasstroms eines solchen Kükenhahns gegenüber denen eines Kükenhahns gemäß dem Stand der Technik.

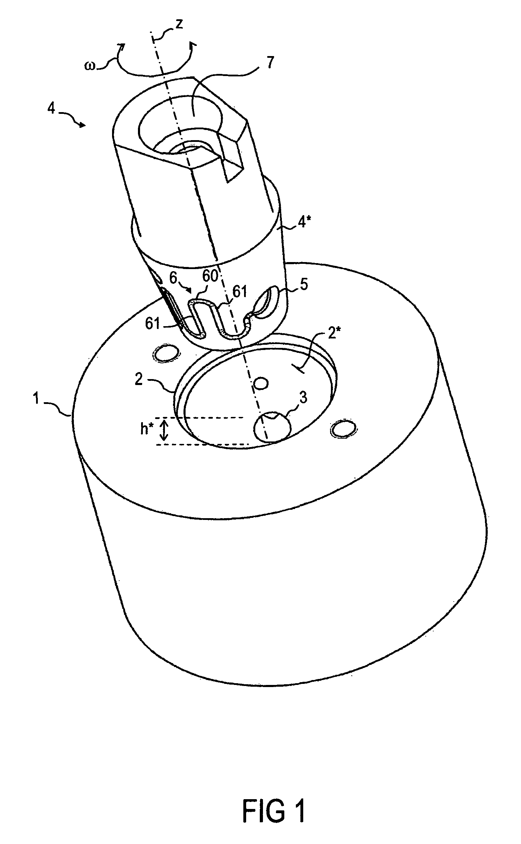

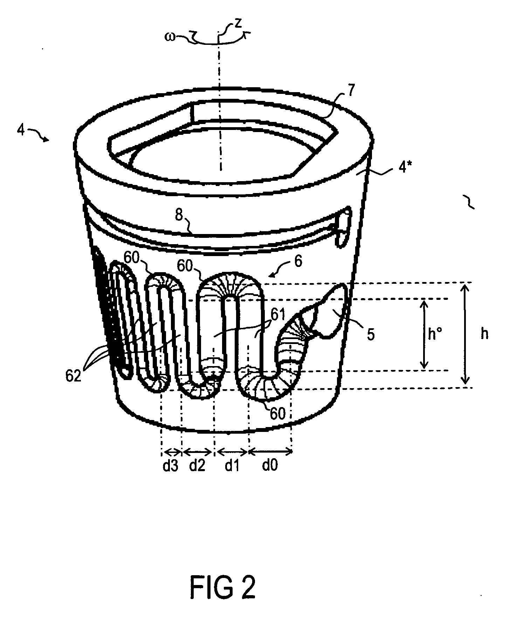

FIG 1 zeigt einen Kükenhahn, welcher im Wesentlichen einen Hahnkörper 1 und ein Küken 4, das genauer in FIG 2 gezeigt ist, aufweist. Im Hahnkörper 1 ist eine Kükenaufnahmeöffnung 2 ausgebildet, welche eine möglichst glatte Innenwandung 2* aufweist. Durch den Hahnkörper 1 führt eine Hahn-Gasdurchtrittsöffnung 3 zu der Kükenaufnahmeöffnung 2, um darüber Gas leiten zu können.

Das Küken 4 weist in zumindest seinem in der Kükenaufnahmeöffnung 2 einsetzbaren Umfangsbereich eine Außenwandung 4* auf, welche möglichst glattflächig ist, um mit der Innenwandung 2* eine zumindest in einer auswählbaren Drehwinkelstellung gasdichte Verbindung - z. B. bei 0° und / oder 350° - einzugehen. Die Außenwandung 4* des Kükens 4 und die Innenwandung 2* der Kükenaufnahmeöffnung 2 besitzen im vorliegenden Ausführungsbeispiel eine konische Form. Ebenfalls möglich ist eine zylindrische Formgebung des Kükens 4 und der Kükenaufnahmeöffnung 2. Von der Außenwandung 4* des Kükens 4 führt eine vorzugsweise runde bzw. zylindrische Küken-Gasdurchtrittsöffnung 5 in den Innenraum des Kükens 4 hinein. Dabei führt die Küken-Gasdurchtrittsöffnung 5 in dem Küken 4 in eine zentrale Gasdurchtrittsöffnung 7, welche zum Zuleiten oder Wegleiten von Gas dient, welches durch die Küken-Gasdurchtrittsöffnung 5 und die Hahn-Gasdurchtrittsöffnung 3 oder in umgekehrter Richtung geströmt ist.

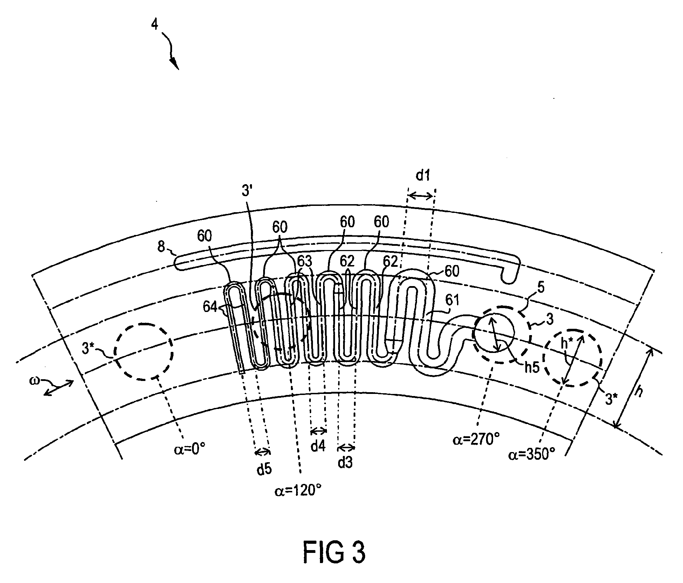

Vorzugsweise, aber nicht zwingend notwendig, ist das Küken 4 um eine Drehachse z als Rotationsachse der Kükenaufnahmeöffnung 2 in einem vorbestimmten Drehwinkelbereich α (FIG 3) in einer Drehrichtung ω bzw. in Umfangsrichtung der Außenwandung 4* um die Drehachse z drehbar. Das Küken 4 kann in für sich bekannter Art und Weise in axialer Richtung der Drehachse z von der Küken-Gasdurchtrittsöffnung 5 deutlich beabstandet eine seitliche Bypass-Öffnung 8 aufweisen, welche die Hahn-Gasdurchtrittsöffnung 3 mit einem weiteren Umfangsabschnitt der Außenwandung 4* des Küken 4 verbindet.

Ferner vorhanden ist ein Kanal 6, welcher in der Außenwandung 4* des Küken 4 ausgebildet ist. Der Kanal 6 führt dabei nur eine begrenzte Tiefe in das Wandungsmaterial des Kükens 4 hinein und reicht nicht bis zu der zentralen Gasdurchtrittsöffnung 7. An seinem einem Ende ist der Kanal 6 mit der Küken-Gasdurchtrittsöffnung 5 so verbunden, dass Gas durch den Kanal 6 in die Küken-Gasdurchtrittsöffnung 5 oder in umgekehrter Richtung strömen kann. Insbesondere ist der Kanal 6 zu der Außenseite hin offen.

In axialer Richtung der Drehachse z befindet sich der Kanal 6 in einem Höhenbereich der Außenwandung 4*, welcher je nach eingestelltem Drehwinkelbereich α von der Hahn-Gasdurchtrittsöffnung 3 überstrichen wird. Dadurch kann ein Gasstrom zwischen der Hahn-Gasdurchtrittsöffnung 3 und der Küken-Gasdurchtrittsöffnung 5 bereits dann entstehen, wenn nur der Kanal 6, nicht aber bereits auch die Küken-Gasdurchtrittsöffnung 5 der Hahn-Gasdurchtrittsöffnung 3 gegenüberliegend angeordnet ist.

Je größer der Abstand der Hahn-Gasdurchtrittsöffnung 3 von der Küken-Gasdurchtrittsöffnung 5 ist, desto geringer ist aufgrund der drosselnden Wirkung des Kanals 6 die Gasdurchflussmenge.

Der Kanal ist erfindungsgemäβ zur Erhöhung seiner Länge zumindest abschnittsweise mehrfach gekrümmt. Die Krümmung kann glatt, z. B. wellenförmig mit einer Sinus- bzw. Kosinusabhängigkeit, oder eckig ausgeführt sein, oder als Kombination daraus. In der gezeigten, besonders bevorzugten Ausführungsform weist der Kanal Quer-Abschnitte 61,62 auf, welche quer zur Umfangsrichtung verlaufend in der Außenwandung 4* ausgebildet sind. Die Quer-Abschnitte 61,62 müssen allgemein nicht streng in einer Richtung quer zur Umfangsrichtung verlaufen, können also auch schräg ausgeprägt sein, jedoch wird eine solche querliegende Ausführungsform besonders bevorzugt.

Je zwei zueinander benachbarte Quer-Abschnitte 61,62 bilden ein jeweiliges Paar von Quer-Abschnitten und sind über hier nur teilweise bezeichnete Verbindungsabschnitte 60 miteinander verbunden, wobei die Verbindungsabschnitte 60 besonders bevorzugt halbkreisförmig ausgestaltet sind. Prinzipiell sind jedoch auch andere Übergänge, insbesondere angewinkelte, speziell rechtwinklige, Übergänge zwischen den Quer-Abschnitten über dann ebenfalls geradlinige, aber in Umfangsrichtung verlaufende Verbindungsabschnitte möglich, so dass z. B. ein rechteckförmiger Kanal entsteht.

Vorzugsweise sind der Abstand d0 der Küken-Gasdurchtrittsöffnung 5 zu dem dieser benachbarten ersten Quer-Abschnitt 61 sowie die hier gezeigten Abstände d1-d3 der jeweils zueinander benachbarten weiteren Quer-Abschnitte 61,62 jeweils unterschiedlich groß. Bevorzugt wird dabei insbesondere, wenn die Abstände d1-d3 mit zunehmender Entfernung von der Küken-Gasdurchtrittsöffnung 5 zunächst kleiner werden.

Eine Quer-Abschnitts-Höhenerstreckung h der Gesamthöhe des Kanals 6 in Verlaufrichtung der Quer-Abschnitte 61,62 ist dabei vorzugsweise größer bzw. höher als eine Gasdurchtrittsöffnungs-Höhenerstreckung h* der Hahn-Gasdurchtrittsöffnung 3. Besonders bevorzugt wird, wenn eine lineare Höhenerstreckung h° eines linear bzw. geradlinig verlaufenden Bereichs der Quer-Abschnitte 61,62 gleich hoch oder höher ist als die Gasdurchtrittsöffnungs-Höhenerstreckung h*. Die Höhe wird von einer Kanalmitte entlang der Grundkontur der Außenwandung aus gerechnet.

Die Anordnung der Quer-Abschnitte 61,62 des Kanals 6 relativ zu der Gasdurchtrittsöffnungs-Höhenerstreckung h* der Hahn-Gasdurchtrittsöffnung 3 ist so gewählt, dass die Hahn-Gasdurchtrittsöffnung 3 vorzugsweise mittig und nur die sich geradlinig erstreckenden Bereiche der Quer-Abschnitte 61 - 64 überstreichend einstellbar ist.

Zusätzlich weisen die bezüglich der Küken-Gasdurchtrittsöffnung 5 vorderen Quer-Abschnitte 61 eine größere Breite auf als die weiter von der Küken-Gasdurchtrittsöffnung 5 entfernt angeordneten Quer-Abschnitte 62. Die Breitenverringerung wird mittels kurzer Verjüngungsabschnitte (ohne Bezugszeichen) erreicht. Hierdurch lässt sich der Gasfluss durch den Kanal noch genauer steuern. Je schmaler die Breite ist, desto geringer ist die Gasdurchflussmenge an diesem und weiter stromabwärts gelegenen Abschnitten.

FIG 3 zeigt als abgerollte Darstellung der Außenwandung 4* des Kükens 4 mit verschiedenen einstellbaren Winkelstellungen der Hahn-Gasdurchtrittsöffnung 3, 3*, 3' relativ zum Küken 4. Dargestellt ist in einem Drehwinkelbereich α von ca. 0° als auch von ca. 350° eine Position der Hahn-Gasdurchtrittsöffnung 3* gegenüber einem Wandungsabschnitt der Außenwandung 4*, in welchem weder die Küken-Gasdurchtrittsöffnung 5 noch der Kanal 6 angeordnet ist. Dadurch kann kein Gas durch die Hahn-Gasdurchtrittsöffnung 3* und die Küken-Gasdurchtrittsöffnung 5 hindurchtreten, der Hahn sperrt also.

Wird das Küken 4 von α = 0° an in Umfangsrichtung über den Drehwinkelbereich gedreht, gelangt die Hahn-Gasdurchtrittsöffnung 3* zuerst mit einem letzten, am weitesten von der Küken-Gasdurchtrittsöffnung 5 entfernten Quer-Abschnitt 64 des Kanals 6 in Überdeckung und dann mit zunehmendem Drehwinkelbereich α mit Quer-Abschnitten 61-64 des Kanals 6 näher zur Küken-Gasdurchtrittsöffnung 5 in Überdeckung, wie es beispielhaft für eine Hahn-Gasdurchtrittsöffnung 3' skizziert ist. Dadurch kann Gas von der Hahn-Gasdurchtrittsöffnung 3' durch den Kanal 6 und die Küken-Gasdurchtrittsöffnung 5 bzw. in umgekehrter Richtung strömen. Aufgrund dessen mäanderförmigen Verlaufs besteht jedoch ein langer Strömungsweg durch den Kanal 6 und damit auch ein hoher Strömungswiderstand, so dass nur eine vergleichsweise geringe Gasmenge hindurchtritt. Die Beschränkung des Gasdurchflusses wird durch den stromabwärts kleiner werdenden Strömungsquerschnitts noch verstärkt.

Mit weiterer Verstellung des Küken in Umfangsrichtung der Außenwandung zu der Hahn-Gasdurchtrittsöffnung 5 hin nimmt der Strömungswiderstand des Kanals 6 ab, so dass der Gasstrom fr stärker wird und die Gasstromrate f zunimmt, wie dies in FIG 4 skizziert ist.

FIG 3 zeigt insbesondere, dass der Abstand zwischen gleichartigen Quer-Abschnitten 61,62,63 bzw. 64 gleicher Breite konstant ist, aber der Abstand bei Übergang zwischen Quer-Abschnitten 61,62,63 bzw. 64 unterschiedlicher Breite veränderlich ist, nämlich zu geringerer Breite hin abnimmt. Im Einzelnen sind von der Küken-Gasdurchtrittsöffnung 5 aus gesehen zunächst zwei Querschnitte 61 größter Breite d1 vorhanden, dann weiter entfernt drei Querabschnitte 62 zweitgrößter Breite d3, dann vier Querabschnitte 63 geringerer Breite und zum Schluss drei Querabschnitte 64 kleinster Breite. Abstände werden von der Kanalmitte aus gerechnet.

Dadurch lässt sich über einen weiten Drehwinkelbereich ein Gasfluss auch bei geringer Gasdurchflussmenge fein dosieren. Eine geringe Stufigkeit der Intensität des Gasflusses, wenn die Gasdurchtrittsöffnung einen neuen Kanalabschnitt 61-64 erreicht oder verlässt ist sehr gering und von einem Nutzer praktisch nicht wahrnehmbar. Insbesondere zeigt die Flamme keinen 'Stufeneffekt'.

FIG 4 zeigt bei dem Diagramm eine gegenüber der Darstellung aus FIG 3 seitenverkehrte Verstellrichtung des Drehwinkelbereichs α. Erkennbar ist ein Regelbereich b mit einer hohen Empfindlichkeit für eine geringe Gasstromrate lf bei einem anfänglich kleinen Drehwinkel, so dass insbesondere eine Gaszufuhr zu einem Gasbrenner mit einer geringen Gasstromrate besonders feinfühlig geregelt werden kann. Insbesondere gilt dies auch für eine manuelle Einstellung eines das derart ausgestaltete Küken 4 regelnden Gasknebels. Mit einer vorzugsweise idealen Strömungscharakteristik gibt es zudem keinen nicht effektiv genutzten Regelbereich ud*. Ermöglicht wird letztendlich eine annähernd für eine Bedienung fast ideale Gasstromrate mit einem sehr hohen Reibungsverlustkoeffizienten bzw. einem sehr hohen Druckabfall-Management von einer theoretischen Gasströmungsmenge Null bis zu einer maximalen Gasstromrate unmittelbar vor der wieder schließenden Stellung.

Abstimmbar ist eine solche vorteilhafte Charakteristik dadurch, dass der gewünschte sehr hohe Reibungsverlust-Koeffizient bzw. Strömungswiderstand durch eine Erhöhung der Länge des Strömungswegs bzw. Kanals 6 und/oder durch ein Verringern des Querschnitts des Kanals 6 erhöht werden kann. Dabei ist das Verringern des Querschnitts des Strömungswegs in Kanal 6 schwieriger, da zur Erzielung eines hohen Reibungsverlust-Koeffizienten und damit einer geringen Gasströmung durch den Kanal 6 ein geringer Querschnitt des Kanals 6 schwieriger zu fertigen.

Besonders bevorzugt wird daher die Reduzierung des Gasstroms durch eine Erhöhung der Länge des Kanals 6. Ein Reibungsverlust-Koeffizient ist dabei vorzugsweise direkt proportional zu der Länge der Strömungsbahn in Kanal 6. Für extrem hohe Reibungsverlust-Koeffizienten kann es dabei trotzdem erforderlich sein, einen sehr schmalen Kanal 6 mit einem nur geringen oder sich verringernden Durchström-Querschnitt stromabwärts vorzusehen.

Ermöglicht wird somit insbesondere ein Gasknebel mit drei ineinander übergehenden Regelbereichen. In für sich bekannter Art und Weise liegt die Hahn-Gasdurchtrittsöffnung 3* in einer geschlossenen Position gegenüber der gasdichten Außenwandung 4* des Kükens 4, so dass ein Gasstrom verhindert wird. In ebenfalls für sich bekannter Art und Weise wird eine maximale Gasstromrate dadurch erzielt, dass die Öffnungen, das heißt, die Hahn-Gasdurchtrittsöffnung 3 und die Küken-Gasdurchtrittsöffnung 5, zueinander zumindest teilweise überdeckend angeordnet sind. Zusätzlich wird eine Zwischenposition bzw. eine Vielzahl von Zwischenpositionen geboten, bei welchen der Kanal 6 der Hahn-Gasdurchtrittsöffnung 3' gegenüberliegend angeordnet ist. Abhängig von dem Abstand der Quer-Abschnitte 61-64 des Kanals 6, welche der Hahn-Gasdurchtrittsöffnung 3' gegenüberliegen, zu der Küken-Gasdurchtrittsöffnung 5 nimmt die Gasstrommenge durch den Kanal 6 mit zunehmender Annäherung der Hahn-Gasdurchtrittsöffnung 3* an die Küken-Gasdurchtrittsöffnung 5 kontinuierlich zu.

Dadurch bietet sich eine Vielzahl von Vorteilen. Erzielt wird eine hohe Regelgenauigkeit für die geringe Gasstromrate lf. In einer maximalen Position wird ein geringer Druckabfall ermöglicht. Eine Formung der Strömungscharakteristik kann leicht durch variable Abstände der Quer-Abschnitte angepasst werden. Erzielt wird so eine Strömungscharakteristik nahe an einer idealen Strömungscharakteristik. Einsatzmöglichkeiten bieten sich für alle Arten von Gasknebeln, insbesondere Gasknebeln zum Einsatz an Gaskochstellen.

Selbstverständlich ist die Erfindung nicht auf die gezeigte Ausführungsform beschränkt. So kann die Breite des Kanals sich ändern. Auch kann die Höhenerstreckung des Kanals unterschiedlich sein. Ferner kann der Kanal über seine gesamte Höhe von der Hahn-Gasdurchtrittsöffnung überstrichen werden.

### Bezugszeichenliste

- 1: Hahnkörper
- 2: Kükenaufnahmeöffnung
- 2*: Innenwandung
- 3,3',3*: Hahn-Gasdurchtrittsöffnung
- 4: Küken
- 4*: Außenwandung
- 5: Küken-Gasdurchtrittsöffnung
- 6: Kanal
- 60: Verbindungsabschnitte
- 61-64: Quer-Abschnitte
- 7: zentrale Gasdurchtrittsöffnung
- 8: seitliche Öffnung
- a: Regelbereich mit geringer Empfindlichkeit
- b: Regelbereich mit hoher Empfindlichkeit
- d0-d5: Abstand der Quer-Abschnitte untereinander
- f: Gasstromrate
- fr: Gasstrom
- fr*: Gasstrom gemäß Stand der Technik
- h: Quer-Abschnitts-Höhenerstreckung
- h*: Gasdurchtrittsöffnungs-Höhenerstreckung
- h°: lineare Höhenerstreckung
- lf: geringe Gasstromrate
- ud*: nicht effektiv genutzter Regelbereich
- z: Drehachse
- α: Drehwinkelbereich
- ω: Drehrichtung

## Patentansprüche

1. Kükenhahn, aufweisend
- einen Hahnkörper (1) mit einer Kükenaufnahmeöffnung (2) und einer Hahn-Gasdurchtrittsöffnung (3) zum Hindurchleiten von Gas zu oder von der Kükenaufnahmeöffnung (2), und
- ein Küken (4), dessen Außenwandung (4*) gasdicht drehbar in der Kükenaufnahmeöffnung (2) gelagert ist und eine Küken-Gasdurchtrittsöffnung (5) aufweist zum Hindurchleiten von Gas von bzw. zu der Hahn-Gasdurchtrittsöffnung (3) durch das Küken (4) abhängig von einem einstellbaren Drehwinkel (α) zwischen dem Hahnkörper (1) und dem Küken (4),wobei
- die Außenwandung (4*) des Kükens (4) einen offenen Kanal (6) aufweist, welcher mit der Küken-Gasdurchtrittsöffnung (5) verbunden ist und abhängig vom Drehwinkel (α) von der Hahn-Gasdurchtrittsöffnung (3) zumindest teilweise überdeckt werden kann,
**dadurch gekennzeichnet, dass**
der Kanal (6) eine mehrfach gekrümmte Form aufweist.

2. Kükenhahn nach Anspruch 1, **dadurch gekennzeichnet, dass** der Kanal (6) quer zur Drehrichtung (ω) des Kükens (4) verlaufende, insbesondere lineare, Quer-Abschnitte (61-64) und diese verbindende Verbindungsabschnitte (60) aufweist, wobei zumindest einzelne der Quer-Abschnitte (61-64) je nach Drehstellung des Kükens die Hahn-Gasdurchtrittsöffnung (3) überdeckend angeordnet sein können.

3. Kükenhahn nach Anspruch 2, **dadurch gekennzeichnet, dass** sich zumindest die Abstände (d1,d3) von zwei Paaren zueinander benachbarter Quer-Abschnitte (61, 62) unterscheiden.

4. Kükenhahn nach Anspruch 3, **dadurch gekennzeichnet, dass** zumindest ein Abstand (d1) eines Paars zueinander benachbarter Quer-Abschnitte (61, 62) größer ist als zumindest ein Abstand (d2 - d6) eines von der Küken-Gasdurchtrittsöffnung (5) dazu weiter beabstandeten Paars zueinander benachbarter Quer-Abschnitte (61, 62).

5. Kükenhahn nach einem der Ansprüche 2 bis 4, **dadurch gekennzeichnet, dass** zumindest zwei der Vielzahl von Quer-Abschnitten (61, 62, 63) eine quer zur Umfangsrichtung des Kükens (4) höhere Höhenerstreckung (h) aufweisen als eine Höhenerstreckung (h*) der Gasdurchtrittsöffnung (3) des Hahnkörpers (1).

6. Kükenhahn nach einem der Ansprüche 1 bis 5, **dadurch gekennzeichnet, dass** der Kanal (6) zumindest teilweise eine gekrümmte, insbesondere wellenförmige, Form aufweist.

7. Kükenhahn nach einem er Ansprüche 1 bis 6, **dadurch gekennzeichnet, dass** zumindest der Kanal (6) zumindest teilweise eine eckige Form aufweist.

8. Kükenhahn nach einem der vorhergehenden Ansprüche, **dadurch gekennzeichnet, dass** der Kanal (6) mit zunehmender Entfernung von der Küken-Gasdurchtrittsöffnung (5) einen zumindest abschnittsweise kleineren Strömungsquerschnitt aufweist.

9. Kükenhahn nach einem der Ansprüche 4 bis 7 in Kombination mit den Ansprüchen 4 und 9, **dadurch gekennzeichnet, dass** Quer-Abschnitte (62-64) mit kleinerem Strömungsquerschnitt einen geringerem Abstand (d3,d4,d5) zueinander aufweisen als Quer-Abschnitte (61-63) mit dazu größerem Strömungsquerschnitt (d1,d3,d4) zueinander.

10. Kükenhahn nach einem der Ansprüche 3 bis 9 in Kombination mit Anspruch 3, wobei die Hahn-Gasdurchtrittsöffnung (3) beim Drehen des Kükens (4) von den Quer-Abschnitten (61-64) in der Längserstreckung der Quer-Abschnitte (61 - 64) vollständig überstrichen wird.

11. Gasherd mit einem Gasbrenner, **dadurch gekennzeichnet, dass** dessen Gaszufuhr mittels des Kükenhahns nach einem vorhergehenden Anspruch eingestellt wird.

## Claims

1. Tap cock comprising
- a tap body (1) with a cock-plug receiving opening (2) and a tap gas-passage opening (3) for the passage of gas to or from the cock-plug receiving opening (2), and
- a cock plug (4), the outer wall (4*) of which is gas-tightly rotatably mounted in the cock-plug receiving opening (2) and has a cock-plug gas-passage opening (5) for the passage of gas from or to the tap gas-passage opening (3) through the cock plug (4) in dependence on a settable rotational angle (α) between the tap body (1) and the cock plug (4), wherein
- the outer wall (4*) of the cock plug (4) has an open channel (6) which is connected with the cock-plug gas-passage opening (5) and can be at least partly covered in dependence on the rotational angle (α) by the tap gas-passage opening (3), **characterised in that** the channel (6) has a multiply curved formed.

2. Tap cock according to claim 1, **characterised in that** the channel (6) has transverse sections (61-64), which extend tranversely to the rotational direction (T) of the cock plug (4) and which are, in particular, linear, and connecting sections (60) connecting these, wherein at least individual ones of the transverse sections (61-64) can be arranged to cover the tap gas-passage opening (3) in dependence on the respective rotational setting of the cock plug.

3. Tap cock according to claim 2, **characterised in that** at least the spacings (d1, d3) of two pairs of mutually adjacent transverse sections (61, 62) are different.

4. Tap cock according to claim 3, **characterised in that** at least one spacing (d1) of one pair of mutually adjacent transverse sections (61, 62) is greater than at least one spacing (d2 - d6) of a pair, which is spaced further from the cock-plug gas-passage opening (5), of mutually adjacent transverse sections (61, 62).

5. Tap cock according to any one of claims 2 to 4, **characterised in that** at least two of the plurality of transverse sections (61, 62, 63) have a height dimension (h) which is higher transversely to the circumferential direction of the cock plug (4) than a height dimension (h*) of the gas-passage opening (3) of the tap body (1).

6. Tap cock according to any one of claims 1 to 5, **characterised in that** the channel (6) has at least in part a curved, particularly wavy, shape.

7. Tap cock according to any one of claims 1 to 6, **characterised in that** at least the channel (6) has at least in part a polygonal shape.

8. Tap cock according to any one of the preceding claims, **characterised in that** the channel (6) has with increasing distance from the cock-plug gas-passage opening (5) a smaller flow cross-section at least in a region.

9. Tap cock according to any one of claims 4 to 7 in combination with claims 4 and 9, **characterised in that** transverse sections (62-64) with smaller flow cross-section have a smaller spacing (d3, d4, d5) from one another than transverse sections (61-63) with greater flow cross-section (d1, d3, d4) have from one another.

10. Tap cock according to any one of claims 3 to 9 in combination with claim 3, wherein the tap gas-passage opening (3) on rotation of the cock plug (4) is completely transited by the transverse sections (61-64) in the length dimension of the transverse sections (61-64).

11. Gas oven with a gas burner, **characterised in that** the gas feed thereof is set by means of the tap cock according to any one of the preceding claims.

## Revendications

1. Robinet à boisseau présentant
- un corps de robinet (1) comprenant un orifice de logement de boisseau (2) et un orifice de passage de gaz du robinet (3), destiné au passage de gaz vers l'orifice de logement de boisseau (2) ou en provenance de l'orifice de logement de boisseau, et
- un boisseau (4) dont la paroi extérieure (4*) est logée de manière rotative et étanche au gaz dans l'orifice de logement de boisseau (2) et présente un orifice de passage de gaz du boisseau (5) destiné au passage du gaz en provenance de l'orifice de passage de gaz du robinet (3) resp. vers l'orifice de passage de gaz du robinet (3) à travers le boisseau (4) en fonction d'un angle de rotation réglable (α) entre le corps de robinet (1) et le boisseau (4),
- la paroi extérieure (4*) du boisseau (4) présentant un canal ouvert (6) lequel est relié à l'orifice de passage de gaz du boisseau (5) et pouvant être recouvert au moins en partie par l'orifice de passage de gaz du robinet (3) en fonction de l'angle de rotation (α),
**caractérisé en ce que**
le canal (6) présente une forme courbée plusieurs fois.

2. Robinet à boisseau selon la revendication 1, **caractérisé en ce que** le canal (6) présente des segments transversaux (61-64) s'étendant transversalement au sens de rotation (w) du boisseau (4), notamment linéaires, et des segments de liaison (60) reliant ceux-là, au moins des segments transversaux (61-64) individuelles pouvant, selon la position de rotation du boisseau, être disposées de manière recouvrant l'orifice de passage de gaz du robinet (3).

3. Robinet à boisseau selon la revendication 2, **caractérisé en ce qu'**au moins les écarts (d1, d3) entre deux paires de segments transversaux voisins l'un à l'autre (61, 62) se différencient.

4. Robinet à boisseau selon la revendication 3, **caractérisé en ce qu'**au moins un écart (d1) d'une paire de segments transversaux (61, 62) voisins l'un à l'autre est plus grand qu'au moins un écart (d2 - d6) d'une autre paire, encore plus éloignée de l'orifice de passage de gaz du boisseau (5), de segments transversaux voisins l'un à l'autre (61, 62).

5. Robinet à boisseau selon l'une quelconque des revendications 2 à 4, **caractérisé en ce qu'**au moins deux de la pluralité de segments transversaux (61, 62, 63) présentent une étendue en hauteur (h) plus haute, transversalement au sens circonférentiel du boisseau (4), qu'une étendue en hauteur (h*) de l'orifice de passage de gaz (3) du corps de robinet (1).

6. Robinet à boisseau selon l'une quelconque des revendications 1 à 5, **caractérisé en ce que** le canal (6) présente au moins en partie une forme courbée, notamment ondulée.

7. Robinet à boisseau selon l'une quelconque des revendications 1 à 6, **caractérisé en ce qu'**au moins le canal (6) présente au moins en partie une forme angulaire.

8. Robinet à boisseau selon l'une quelconque des revendications précédentes, **caractérisé en ce que** le canal (6) présente une section transversale d'écoulement plus petite au moins par segments, au fur et à mesure que l'éloignement augmente par rapport à l'orifice de passage de gaz du boisseau (5).

9. Robinet à boisseau selon l'une quelconque des revendications 4 à 7 en combinaison avec les revendications 4 et 9, **caractérisé en ce que** les segments transversaux (62-64) à section d'écoulement plus petite présentent un écart plus petit (d3, d4, d5) les unes par rapport aux autres que les segments transversaux (61-63) à section d'écoulement (d1, d3, d4) plus grande les unes par rapport aux autres.

10. Robinet à boisseau selon l'une quelconque des revendications 3 à 9 en combinaison avec la revendication 3, l'orifice de passage de gaz du robinet (3), lorsque le boisseau (4) est tourné, étant complètement balayé par les segments transversaux (61-64) dans l'étendue longitudinale des segments transversaux (61-64).

11. Cuisinière à gaz comprenant un brûleur à gaz, **caractérisé en ce que** l'arrivée de gaz de celui-ci est réglée au moyen du robinet à boisseau selon l'une quelconque des revendications précédentes.
